# FASCICULE DE BREVET EUROPEEN

(11) **EP 4 618 273 B1**
(45) Date de publication et mention de la délivrance du brevet: **02.09.2026**
(21) Numéro de dépôt: 24305392.3
(22) Date de dépôt: 15.03.2024
(51) Int. Cl.: H01M 50/209, H01M 50/264

(54) **DISPOSITIF D'ASSEMBLAGE DE CELLULES DANS UN PACK DE BATTERIE**
VORRICHTUNG ZUM VERBINDEN VON ZELLEN IN EINEM BATTERIEPACK
DEVICE FOR ASSEMBLING CELLS IN A BATTERY PACK

(43) Date de publication de la demande: 17.09.2025
(73) Titulaire: Automotive Cells Company SE, 33520 Bruges (FR)
(72) Inventeur: BAYLAC, Johan, 33800 BORDEAUX (FR); ARDRINO, Thomas, 33320 Eysines (FR); DE ROLAND, Geoffroy, 33520 Bruges (FR); BRIEN, Patrick, 33290 Parempyre (FR)
(74) Mandataire: Alatis

(56) Documents cités:
- US-A1- 2016 133 898
- US-A1- 2022 294 064
- US-B2- 9 472 793

## Description

### DOMAINE TECHNIQUE DE L'INVENTION

L'invention concerne, de façon générale, le domaine de la fixation et du conditionnement des cellules électrochimiques destinées au stockage de l'énergie électrique et s'intéresse, plus particulièrement, à un dispositif d'assemblage de cellules dans un pack de batterie.

### ÉTAT DE LA TECHNIQUE ANTÉRIEURE

Actuellement, les batteries utilisées dans le domaine automobile, contiennent de nombreuses cellules de façon à disposer d'une capacité suffisante de stockage de l'énergie électrique afin de procurer une grande autonomie aux véhicules qui en sont équipés.

Les véhicules automobiles à traction ou à propulsion électrique ou hybride, comportent un ou plusieurs blocs souvent désignés par l'expression anglaise « battery pack », reliés à un réseau de puissance pour alimenter un moteur électrique (de traction ou de propulsion). Un tel pack est généralement constitué d'une série de modules (généralement 12 modules) correspondant à des sous-ensembles autonomes de plusieurs cellules électrochimiques solidarisées mécaniquement et pourvus d'une interface de montage et de bornes de raccordement. Chaque pack de batterie comprend ainsi une série de cellules électrochimiques, générant du courant par réaction chimique, par exemple de type lithium-ion (ou Li-ion), de type Ni-Mh, ou Ni-Cd, plomb ou autres.

Une cellule électrochimique comprend, en particulier, un empilage (dit aussi « stack ») d'électrodes positives reliées les unes aux autres et un empilage d'électrodes négatives reliées les unes aux autres et séparées par une interface. Le groupement des électrodes positives reliées les unes aux autres forme une borne positive, tandis que le groupement des électrodes négatives reliées les unes aux autres forme une borne négative.

Chaque stack est logé dans une coque ou boîtier de cellule, typiquement métallique, généralement en aluminium ou tout autre matériau remplissant cette fonction. Une fois l'ensemble des électrodes intégrées, conditionnées et empilées dans un stack, une plaque formant couvercle de la coque est soudée à un godet (ou « CAN ») de la coque par laser ou tout autre procédé connu permettant de réaliser la connexion structurelle des électrodes et l'étanchéité de la cellule.

Il est connu d'assembler, en série et/ou en parallèle, une pluralité de cellules électrochimiques afin de réaliser des modules à l'aide de moyens d'interconnexion assurant un contact électrique entre les bornes de deux cellules électrochimiques adjacentes ou voisines les unes des autres.

US 2016/133898 A1 divulgue le préambule de la revendication 1.

Afin d'assembler mécaniquement les cellules électrochimiques qui sont reliées électriquement, il est connu de les aligner sur un support plan ou un rail et de les maintenir par des plaques parallèles fixes venant en appui contre leurs deux extrémités pour former le module.

Un autre mode d'assemblage utilisé couramment consiste à visser ou à coller les cellules une par une sur un socle de support situé à la partie inférieure du carter délimitant le module.

Toutefois, ces modes d'assemblage sont problématiques car ils ne permettent pas d'extraire les cellules du module qui les contient, indépendamment les unes des autres. Or, lors de la maintenance des batteries, il s'avère parfois nécessaire de ne remplacer que les cellules défectueuses tout en conservant les autres cellules dans le module. Cette situation est d'autant plus critique quand il s'agit de cellules de grandes dimensions.

Or, les modes d'assemblage traditionnels ne permettent pas de telles opérations et il en résulte un coût plus important pour l'utilisateur des batteries ou pour le propriétaire du véhicule qui se voit facturer le remplacement d'un module ou d'un pack complet.

En outre, le recyclage des batteries est un procédé impliquant le traitement global des packs avec toutes leurs cellules. Ce procédé est critique pour l'environnement qui se trouve alors d'autant plus impacté qu'il est nécessaire de traiter un grand nombre de cellules car les cellules qui sont toujours en état de marche ne sont généralement pas séparées et récupérées à partir des modules.

### EXPOSE DE L'INVENTION

Dans ce contexte, l'invention a donc consisté à rechercher une solution technique destinée à surmonter les problématiques posées par la configuration actuelle des packs de batteries en modifiant et en perfectionnant le mode d'assemblage des cellules.

En particulier, l'invention propose de s'affranchir des modules pour assembler directement les cellules entre elles et, de cette manière, rendre possible l'intégration directe des cellules dans le pack de batterie de façon à ne remplacer que les cellules défaillantes sans qu'il soit nécessaire de changer un module complet.

Ce but est atteint, selon l'invention, au moyen d'un dispositif d'assemblage d'une série de cellules juxtaposées et conditionnées dans un pack de batterie, lesdites cellules étant pourvues chacune d'un couvercle et étant reliées électriquement entre elles par des broches d'interconnexion solidaires de la face frontale desdits couvercles, caractérisé en ce qu'il comprend une embase longitudinale montée, d'une part, en regard de la partie inférieure de la face frontale des couvercles et supportant, d'autre part, au moins une bride destinée à recevoir des organes de fixation sur ladite embase et portant des éléments de liaison avec lesdites cellules.

De préférence, les organes de fixation de la bride sur l'embase sont formés d'éléments vissés dans des alésages taraudés réalisés dans l'embase.

Selon un premier mode de réalisation du dispositif d'assemblage de l'invention, la bride est montée sur l'embase et lesdits éléments de liaison avec les cellules comprennent des bossages prenant appui sur des languettes inférieures prolongeant perpendiculairement la face frontale des couvercles des cellules.

Selon une variante spécifique, la bride est formée d'une lame unique portant autant de bossages qu'il y a de languettes de cellules.

De préférence, l'embase est montée bord à bord avec les languettes des cellules.

Dans ce cas, l'embase présente un méplat supérieur et une paroi en créneau en regard de la partie inférieure de la face frontale des couvercles et dans laquelle sont ménagés les alésages taraudés.

Selon un deuxième mode de réalisation de l'invention, le dispositif d'assemblage comprend une bride par paire de cellules, ladite bride étant formée d'un profilé s'étendant parallèlement à la paroi frontale desdites cellules et dont l'extrémité, qui porte les éléments de liaison, prend appui sur les broches d'interconnexion.

Selon une variante spécifique, les éléments de liaison sont formés de pattes s'étendant entre 20° et 120° par rapport au profilé et, de préférence perpendiculairement à ce profilé.

Dans ce cas, l'embase présente un méplat supérieur dans lequel sont ménagés les alésages taraudés et une paroi chanfreinée en regard de la partie inférieure de la face frontale des couvercles.

Le dispositif de l'invention permet une simplification des modes d'assemblage et de démontage des cellules et offre ainsi un gain de temps significatif. Grâce à l'invention, les cellules sont maintenues verticalement sur chaque extrémité des couvercles ou des broches d'interconnexion par une ou plusieurs brides.

Ces brides sont, respectivement, soit sous forme d'une lame ou bavette longitudinale en une seule pièce, soit sous forme de profilés verticaux. Cette bride se visse sur une embase qui est, de préférence, solidarisée au pack, sur un socle ou sur toutes autres pièces rapportées. La fixation de la bride par vissage sur l'embase permet ainsi de verrouiller l'assemblage de toutes les cellules du pack en une seule opération.

### BRÈVE DESCRIPTION DES FIGURES

D'autres caractéristiques et avantages de l'invention ressortiront à la lecture de la description qui va suivre, en référence aux figures annexées, pour lesquelles :
- la figure 1 est une vue partielle en perspective d'un pack de batterie pourvu d'un dispositif d'assemblage des cellules selon un premier mode de réalisation de l'invention ;
- la figure 2 est une vue en perspective du pack de batterie de la figure 1 avec le dispositif d'assemblage de l'invention en vue éclatée ;
- la figure 3 est une vue latérale du pack de batterie de la figure 1 ;
- la figure 4 est une vue latérale du pack de batterie des figures 1 et 3 avec le dispositif d'assemblage de l'invention en vue partiellement éclatée ;
- la figure 5 est une vue de détail éclatée et agrandie du dispositif d'assemblage de la figure 4 ;
- la figure 6 est une vue de dessus du pack de batterie de la figure 1 ;
- la figure 7 est une vue de face du pack de batterie de la figure 1 ;
- la figure 8 est une vue en perspective d'un pack de batterie pourvu d'un dispositif d'assemblage des cellules selon un deuxième mode de réalisation de l'invention ;
- la figure 9 est une vue en perspective du pack de batterie de la figure 7 avec le dispositif d'assemblage de l'invention en vue éclatée.

Pour plus de clarté, les éléments identiques ou similaires sont repérés par des signes de référence identiques dans la description et sur les figures.

### DESCRIPTION DÉTAILLÉE D'UN MODE DE RÉALISATION

Naturellement, les modes de réalisation du dispositif d'assemblage des cellules de l'invention et du pack de batterie illustrés schématiquement par les figures présentées ci-dessus et décrites ci-après, n'est donné qu'à titre d'exemple non limitatif. Il est explicitement prévu dans le cadre de l'invention que l'on puisse proposer et combiner entre eux différents modes pour en proposer d'autres.

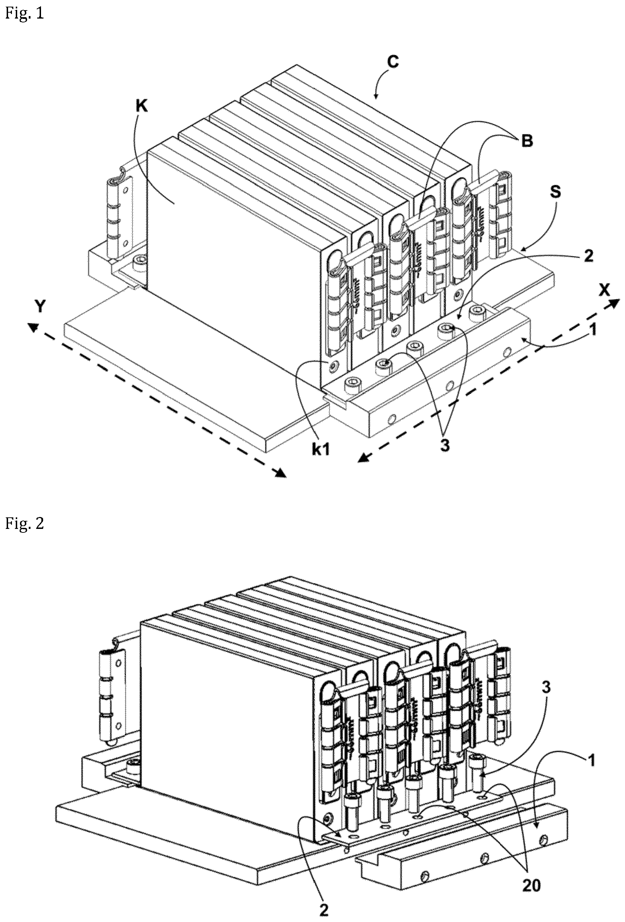

Comme illustré, notamment par la figure 1, ces cellules C sont généralement juxtaposées et conditionnées dans un pack de batterie. Ces cellules sont, en outre, pourvues chacune d'une coque ou enveloppe **K** comprenant un godet (ou « CAN ») et un couvercle **k1** et sont reliées électriquement entre elles par des broches **B** d'interconnexion solidaires de la face frontale des couvercles **k1.**

Afin d'assembler mécaniquement les cellules électrochimiques qui sont reliées électriquement, il est connu de les aligner sur un support plan ou un rail et de les maintenir par des plaques parallèles fixes venant en appui contre leurs deux extrémités ou de les visser, ou bien encore de les coller une par une sur un socle de support situé à la partie inférieure du module de cellules.

Toutefois, ces modes d'assemblage traditionnels sont problématiques car ils ne permettent pas d'extraire les cellules du module ou du pack qui les contient, indépendamment les unes des autres. Or, lors de la maintenance des batteries, il s'avère parfois nécessaire de ne remplacer que les cellules défectueuses tout en conservant les autres cellules dans le module. Cette situation est d'autant plus critique quand il s'agit de cellules de grandes dimensions.

Dans ce contexte, l'invention vise à proposer une solution technique permettant de simplifier le mode d'assemblage des cellules **C.** À cet effet et comme illustré par les figures 1 à 8, l'invention consiste en un dispositif d'assemblage comprenant une embase longitudinale **1** montée, d'une part, en regard de la partie inférieure de la face frontale des couvercles **k1** et supportant, d'autre part, au moins une bride **2** destinée à recevoir des organes assurant sa fixation sur cette embase. Cette bride **2** porte, par ailleurs, des éléments de liaison avec les cellules **C.**

De préférence, les organes de fixation de la bride sur l'embase sont formés de vis **3** vissées dans des alésages taraudés **10** réalisés dans l'embase **1.** Le pack de cellules **C** comprend un socle **S** sur lequel repose l'ensemble des cellules.

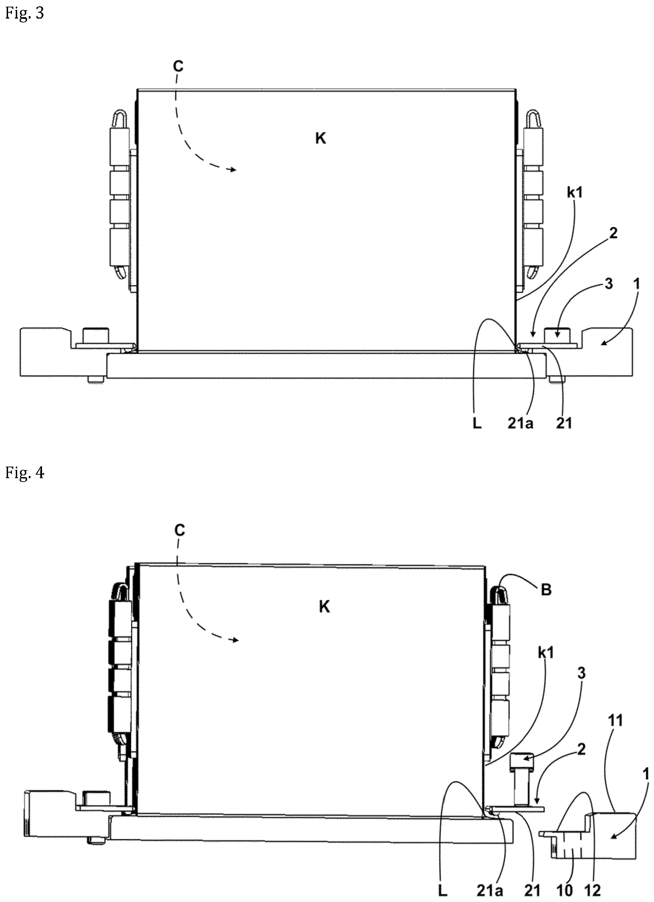

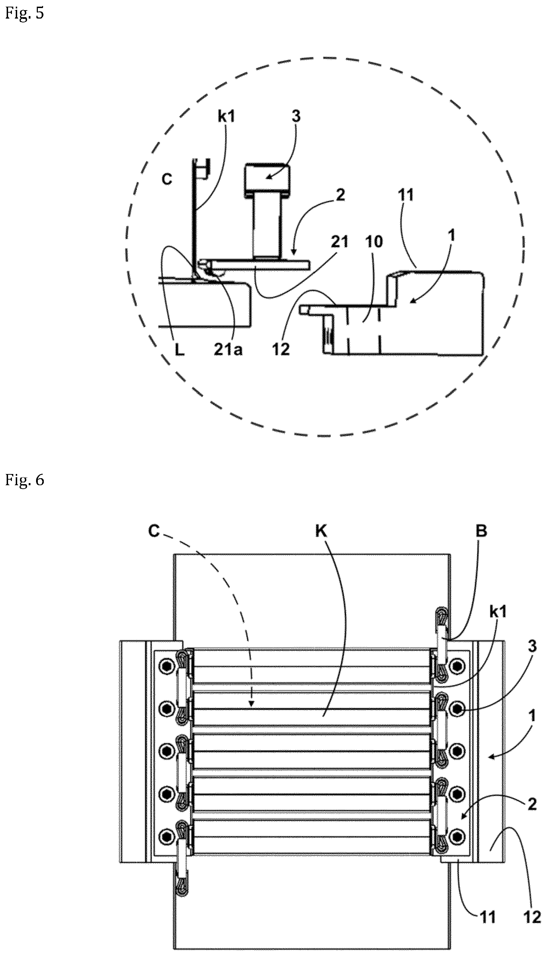

Selon un premier mode de réalisation du dispositif d'assemblage de l'invention représenté sur les figures 1 à 7, la bride **2** est formée d'une lame ou bavette unique **21** montée à plat sur l'embase **1** (et selon l'axe **X** de la figure 1). Les éléments de liaison avec les cellules **C** comprennent ici des bossages **21a** prenant appui sur des languettes inférieures **L** prolongeant perpendiculairement (selon l'axe **Y** de la figure 1) la coque **K** ou la face frontale des couvercles **k1** des cellules **C.** Ces bossages **21a** font saillie sur la face inférieure de la bride **2** (figures 4 et 5).

Dans ce mode de réalisation spécifique, la bride **2** porte autant de bossages **21a** qu'il y a de languettes **L** de cellules **C.** De préférence, l'embase **1** est ici montée bord à bord avec les languettes **L.** La lame **21** est pourvue d'orifices **20** alignés avec les alésages **10** de l'embase **1** et destinés à la pose des organes de fixation **3.**

Toujours dans ce mode de réalisation, l'embase **1** présente un méplat supérieur **11** et une paroi **12** en créneau dans laquelle sont ménagés les alésages taraudés **10** et sur laquelle est fixée la bride **2.** Le rebord de l'embase **1** est placé en regard de la partie inférieure de la face frontale des couvercles **k1** et donc dans le prolongement des languettes **L.**

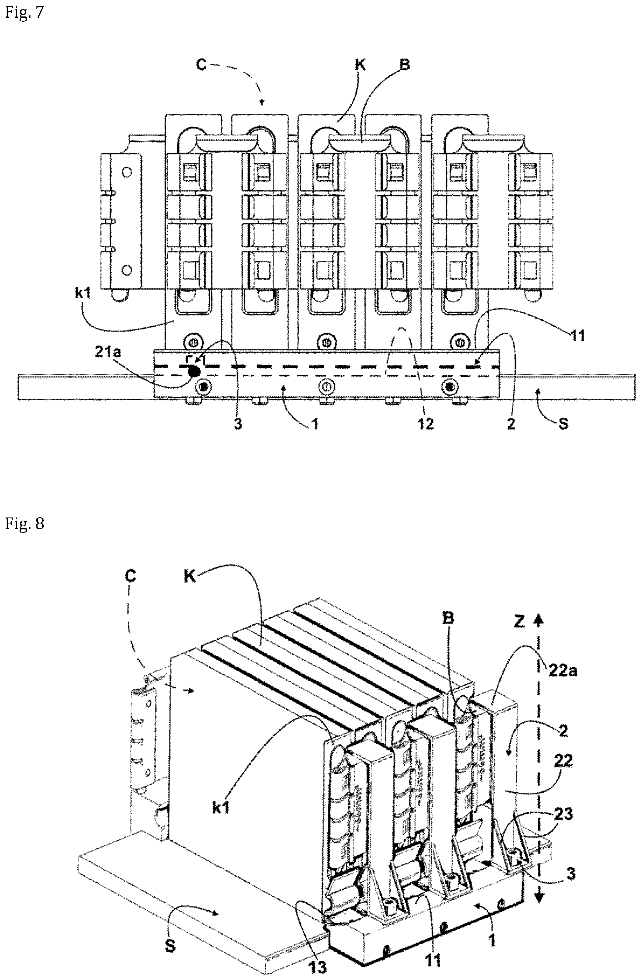

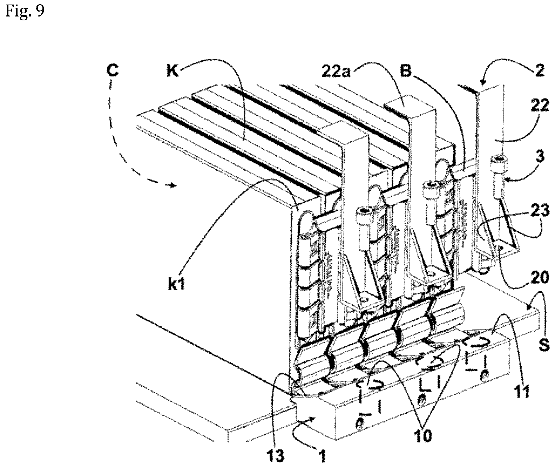

Selon un deuxième mode de réalisation de l'invention représenté sur les figures 8 et 9, le dispositif d'assemblage comprend une bride **2** par paire de cellules **C.** Cette bride **2** est ici formée d'un profilé ou montant **22** s'étendant parallèlement à la paroi frontale des couvercles **k1** des cellules **C** (et selon l'axe **Z** de la figure 8). Le pied des profilés **22** est étayé par des nervures latérales **23** et est pourvu d'un orifice **20** pour la pose d'un organe de fixation tel qu'une vis **3.**

L'extrémité des profilés **22,** porte les éléments de liaison qui prennent ici appui sur les broches **B** d'interconnexion des cellules **C.** Dans ce mode de réalisation, les éléments de liaison sont formés de pattes **22a** s'étendant généralement entre 20° et 120° et, de préférence perpendiculairement, par rapport au profilé **22.**

Toujours dans ce mode de réalisation, l'embase **1** présente un méplat supérieur **11** dans lequel sont ménagés les alésages taraudés **10** et une paroi chanfreinée **13** en regard de la partie inférieure de la face frontale des couvercles **k1.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Dispositif d'assemblage d'une série de cellules (C) juxtaposées et conditionnées dans un pack de batterie, lesdites cellules étant pourvues chacune d'un couvercle (k1) et étant reliées électriquement entre elles par des broches (B) d'interconnexion solidaires de la face frontale desdits couvercles, comprenant une embase longitudinale (1) montée, d'une part, en regard de la partie inférieure de la face frontale des couvercles (k1) et supportant, d'autre part, au moins une bride (2) destinée à recevoir des organes de fixation sur ladite embase et **caractérisé en ce qu'**il porte des éléments de liaison (21a, 22a) avec lesdites cellules.

2. Dispositif selon la revendication 1, **caractérisé en ce que** lesdits organes de fixation de la bride (2) sur l'embase (1) sont formés d'éléments (3) vissés dans des alésages taraudés (10) réalisés dans l'embase (1).

3. Dispositif selon l'une des revendication 1 ou 2, **caractérisé en ce que** ladite bride (2) est montée sur l'embase (1) et lesdits éléments de liaison avec les cellules comprennent des bossages (21a) prenant appui sur des languettes inférieures (L) prolongeant perpendiculairement la face frontale des couvercles (k1) des cellules (C).

4. Dispositif selon la revendication précédente, **caractérisé en ce que** ladite bride (2) est formée d'une lame unique (21) portant autant de bossages (21a) qu'il y a de languettes (L) de cellules.

5. Dispositif selon l'une des revendications 3 ou 4, **caractérisé en ce que** ladite embase (1) est montée bord à bord avec les languettes (L) des cellules.

6. Dispositif selon les revendications 2 et 4 ou 5, **caractérisé en ce que** ladite embase (1) présente un méplat supérieur (11) et une paroi en créneau (12) en regard de la partie inférieure de la face frontale des couvercles (k1) et dans laquelle sont ménagés les alésages taraudés (10).

7. Dispositif selon la revendication 1 ou 2, **caractérisé en ce qu'**il comprend une bride (2) par paire de cellules (C), ladite bride étant formée d'un profilé (22) s'étendant parallèlement à la paroi frontale du couvercle (k1) desdites cellules et dont l'extrémité, qui porte les éléments de liaison, prend appui sur les broches (B) d'interconnexion.

8. Dispositif selon la revendication précédente, **caractérisé en ce que** lesdits éléments de liaison sont formés de pattes (22a) s'étendant entre 20° et 120° par rapport au profilé (22).

9. Dispositif selon les revendications 2 et 7 ou 8, **caractérisé en ce que** ladite embase (1) présente un méplat supérieur (11) dans lequel sont ménagés les alésages taraudés (10) et une paroi chanfreinée (13) en regard de la partie inférieure de la face frontale des couvercles (k1).

## Patentansprüche

1. Vorrichtung zum Zusammenbauen einer Reihe von nebeneinander angeordneten und in einem Batteriepack konfektionierten Zellen (C), wobei die Zellen jeweils mit einer Abdeckung (k1) versehen sind und durch fest mit der Vorderfläche der Abdeckungen verbundene Verbindungsstifte (B) elektrisch miteinander verbunden sind, umfassend einen länglichen Sockel (1), der einerseits gegenüber dem unteren Teil der Vorderseite der Abdeckungen (k1) montiert ist und andererseits mindestens einen Flansch (2) trägt, der dazu bestimmt ist, Befestigungselemente an dem Sockel aufzunehmen, und
**dadurch gekennzeichnet, dass** sie Elemente (21a, 22a) zur Verbindung mit den Zellen trägt.

2. Vorrichtung nach Anspruch 1, **dadurch gekennzeichnet, dass** die Elemente zum Befestigen des Flansches (2) an dem Sockel (1) aus Elementen (3) gebildet sind, die in Gewindebohrungen (10) eingeschraubt sind, die in dem Sockel (1) ausgebildet sind.

3. Vorrichtung nach einem der Ansprüche 1 oder 2,
**dadurch gekennzeichnet, dass** der Flansch (2) auf dem Sockel (1) montiert ist und die Elemente zur Verbindung mit den Zellen Vorsprünge (21a) umfassen, die sich auf unteren Laschen (L) abstützen, die die Vorderfläche der Abdeckungen (k1) der Zellen (C) senkrecht verlängern.

4. Vorrichtung nach dem vorstehenden Anspruch,
**dadurch gekennzeichnet, dass** der Flansch (2) aus einer einzigen Zunge (21) gebildet ist, die so viele Vorsprünge (21a) trägt, wie Zellenlaschen (L) vorhanden sind.

5. Vorrichtung nach einem der Ansprüche 3 oder 4,
**dadurch gekennzeichnet, dass** der Sockel (1) Kante an Kante mit den Zellenlaschen (L) montiert ist.

6. Vorrichtung nach Ansprüchen 2 und 4 oder 5,
**dadurch gekennzeichnet, dass** der Sockel (1) eine obere Abflachung (11) und gegenüber dem unteren Teil der Vorderfläche der Abdeckungen (k1) eine zinnenförmige Wand (12), in der die Gewindebohrungen (10) ausgebildet sind, aufweist.

7. Vorrichtung nach Anspruch 1 oder 2, **dadurch gekennzeichnet, dass** sie einen Flansch (2) pro Zellpaar (C) umfasst, wobei der Flansch aus einem Profil (22) gebildet ist, das sich parallel zu der Vorderwand der Abdeckung (k1) der Zellen erstreckt und dessen Ende, das die Verbindungselemente trägt, sich auf den Verbindungsstiften (B) abstützt.

8. Vorrichtung nach dem vorstehenden Anspruch,
**dadurch gekennzeichnet, dass** die Verbindungselemente aus Laschen (22a) gebildet sind, die sich relativ zu dem Profil (22) zwischen 20° und 120° erstrecken.

9. Vorrichtung nach Ansprüchen 2 und 7 oder 8,
**dadurch gekennzeichnet, dass** der Sockel (1) eine obere Abflachung (11), in der die Gewindebohrungen (10) ausgebildet sind, und gegenüber dem unteren Teil der Vorderfläche der Abdeckungen (k1) eine abgeschrägte Wand (13) aufweist.

## Claims

1. A device for assembling a series of cells (C) arranged side by side and packaged in a battery pack, said cells each being provided with a cover (k1) and being electrically connected to one another by interconnecting pins (B) integral with the front face of said covers, comprising a longitudinal base (1) mounted, on the one hand, so as to face the lower part of the front face of the covers (k1) and supporting, on the other hand, at least one flange (2) intended to receive members for attachment to said base and **characterized in that** it carries elements (21a, 22a) for connecting to said cells.

2. The device according to claim 1, **characterized in that** said members for attaching the flange (2) to the base (1) are formed by elements (3) screwed into threaded bores (10) made in the base (1).

3. The device according to claim 1 or 2, **characterized in that** said flange (2) is mounted on the base (1) and said elements for connecting to the cells comprise projections (21a) resting on lower tabs (L) extending perpendicularly from the front face of the covers (k1) of the cells (C).

4. The device according to the preceding claim, **characterized in that** said flange (2) is formed by a single strip (21) bearing as many projections (21a) as there are cell tabs (L).

5. The device according to one of claims 3 or 4, **characterized in that** said base (1) is mounted edge-to-edge with the tabs (L) of the cells.

6. The device according to claims 2 and 4 or 5, **characterized in that** said base (1) has an upper flat surface (11) and a stepped wall (12) which faces the lower part of the front face of the covers (k1) and in which the threaded bores (10) are made.

7. The device according to claim 1 or 2, **characterized in that it** comprises one flange (2) per pair of cells (C), said flange being formed by a profile (22) which extends parallel to the front wall of the cover (k1) of said cells and the end of which, which carries the connecting elements, rests on the interconnecting pins (B).

8. The device according to the preceding claim, **characterized in that** said connecting elements are formed by lugs (22a) extending between 20° and 120° with respect to the profile (22).

9. The device according to claims 2 and 7 or 8, **characterized in that** said base (1) has an upper flat surface (11) in which the threaded bores (10) are made and a chamfered wall (13) facing the lower part of the front face of the covers (k1).
